# EUROPÄISCHE PATENTSCHRIFT

(11) **EP 0 854 769 B1**
(45) Veröffentlichungstag und Bekanntmachung des Hinweises auf die Patenterteilung: **27.02.2002**
(21) Anmeldenummer: 96946356.1
(22) Anmeldetag: 11.10.1996
(51) Int. Cl.: B24B 13/06

(54) **VERFAHREN ZUM HERSTELLEN VON OPTISCHEN OBERFLÄCHEN SOWIE BEARBEITUNGSMASCHINE ZUR DURCHFÜHRUNG DES VERFAHRENS**
PROCESS FOR MANUFACTURING OPTICAL SURFACES AND SHAPING MACHINE FOR CARRYING OUT THIS PROCESS
PROCEDE DE FABRICATION DE SURFACES OPTIQUES ET MACHINE A USINER PROPRE A METTRE EN OEUVRE CE PROCEDE

(30) Priorität: 14.10.1995 DE 19538274
(43) Veröffentlichungstag der Anmeldung: 29.07.1998
(73) Patentinhaber: Carl Zeiss, 73446 Oberkochen (DE)
(72) Erfinder: HOF, Albrecht, D-73430 Aalen (DE); MEHLKOPP, Klaus, D-52477 Alsdorf (DE)
(74) Vertreter: König, Werner, Dipl.-Ing.
(86) Internationale Anmeldenummer: DE9601947
(87) Internationale Veröffentlichungsnummer: WO9713603

(56) Entgegenhaltungen:
- EP-A- 0 439 425
- EP-A- 0 453 627
- EP-A- 0 568 375
- EP-A- 0 641 626
- DE-A- 2 363 882
- US-A- 5 195 407
- US-A- 5 430 504

## Beschreibung

Die Erfindung betrifft ein Verfahren zum Herstellen von optischen Oberflächen, insbesondere von ophtalmischen Linsen und Formschalen zur Herstellung von ophtalmischen Linsen (insbesondere asphärischen Kunststofflinsen), sowie eine Bearbeitungsmaschine zur Durchführung des Verfahrens.

Eine Vorrichtung gemäß Oberbegriff des Anspruchs 1 und ein Verfahren gemäß Oberbegriff des Anspruchs 20 sind aus der EP-A-0 439 425 bekannt.

Optische Oberflächen und insbesondere ophtalmische Linsen mit komplizierter Geometrie, z.B. Gleitsichtgläser, können heute aus Silikatglas oder aus Kunststoff hergestellt werden. Als Silikatlinsen werden sie durch Schleifen und nachfolgendes Polieren hergestellt. Kunststofflinsen werden durch Gießen in einer vorher gefertigten Negativform gefertigt. Die Negativformen, sogenannte Formschalen, werden aus Silikatglas mit der gleichen Methode wie bei der Fertigung von ophtalmischen Linsen, also ebenfalls durch Schleifen und Polieren, hergestellt.

Nachteilig bei dieser Vorgehensweise ist, daß insbesondere für die Fertigung von ophtalmischen Linsen alle benötigten geometrischen Formen vorrätig gehalten werden müssen.

Nachteilig ist außerdem, daß sich bei den mehrstufigen Fertigungsprozessen die Toleranzen der einzelnen Schritte ungünstig auf das Endprodukt auswirken können. Korrekturstrategien sind sehr aufwendig und kompliziert. Mit jedem zusätzlichen Prozeßschritt wird die Situation unübersichtlicher, da Fehler meistens erst am Schluß des Prozesses feststellbar sind und so die Ursache möglicherweise nur schwer zu lokalisieren ist.

Durch die US-PS 5 320 006 ist es bereits bekannt, die Grundform von Kunststofflinsen auf einer geeigneten Drehmaschine zu drehen und sie nachfolgend auf einer Poliermaschine fertig zu bearbeiten, wobei die Krümmung des Polierwerkzeuges gemessen und als Regelgröße für das Drehwerkzeug verwendet wird, um einen möglichst genau an das Polierwerkzeug angepaßten Rohling zu erzeugen und so das Polieren auf ein Minimum zu beschränken. Abgesehen davon, daß immer noch ein aufwendiger Poliervorgang verbleibt, sind mit dieser Methode nur sphärische, allenfalls torisch geformte Brillenlinsen herstellbar. Gleitsichtlinsen weisen komplizierte asphärische Formen auf und können auf diese Weise nicht hergestellt werden.

Der Erfindung liegt die Aufgabe zugrunde, eine vorrichtung und ein Verfahren anzugeben, womit auch geometrisch kompliziert geformte optische Oberflächen und insbesondere ophtalmische Linsen und Formschalen zur Herstellung von ophtalmischen Linsen nach individueller Datenvorgabe in einem einzigen Prozeßschritt direkt gefertigt werden können, wobei keine oder zumindest nur geringe Nacharbeiten zur Fertigstellung der optischen Oberflächen und insbesondere der ophtalmischen Linsen und Formschalen zur Herstellung von ophtalmischen Linsen vonnöten sein sollen.

Erfindungungsgemäß wird die Aufgabe durch die in Anspruch 1 definierte Vorrichtung und das in Anspruch 20 angegebene Verfahren gelöst.

Durch das erfindungsgemäße Verfahren kann ein Werkzeugstichel so schnell verfahren werden, daß die in Umfangsrichtung auftretenden, durch die asphärische Form bedingten Höhenänderungen aus einem Kunststoffrohling herausgearbeitet werden können. Der Stichel kann einen sehr kleinen Radius haben, wodurch der Eingriff nahezu punktförmig wird. Der Stichel kann aber auch einen Radius von mehreren Millimetern aufweisen. Er kann mit einem monokristallinen Diamanten bestückt sein.

Die erzeugte Oberfläche ist in der Regel bereits gebrauchsfertig. Gegebenenfalls bedarf es zum Herstellen der Gebrauchsfähigkeit noch einer geringen Nacharbeit durch Polieren. Die Form wird dabei vollständig durch den Drehprozeß bestimmt und durch das Polieren nicht mehr verändert.

Alternativ zum Polieren kann die Oberfläche auch z.B. durch Tauchen in Lack gebrauchsfähig gemacht werden.

Neben ophtalmischen Linsen können mit dem Verfahren auch Formschalen zur Herstellung von ophtalmischen Linsen, z.B. aus Metall oder Keramik, hergestellt werden. Polieren ist auch hier nur in sehr geringem Umfang erforderlich. Des weiteren können optische Oberflächen, z.B. andere Linsen oder Spiegel mit komplizierter, nicht-rotationssymmetrischer Form, hergestellt werden.

Erfindungsgemäß kann in bevorzugter Weise vorgesehen werden, daß die bei der Zustellung entstehende Reaktionskraft durch einen statischen oder dynamischen Massenausgleich ausgeglichen wird.

Für den Einbau der Linsen oder Spiegel, aber insbesondere der Brillenlinsen in die Brillenfassung, müssen Marken auf der Oberfläche angebracht sein, die eine schnelle Orientierung erlauben. Diese Marken, die bisher zusätzlich mit speziellen Diamant-Werkzeugen oder mit hochenergetischer Laserstrahlung erzeugen werden müssen, können während des Bearbeitungsprozesses nunmehr direkt miterzeugt werden, da es möglich ist, ein punktförmig arbeitendes Werkzeug zu verwenden. Alle Reproduzierbarkeitsprobleme, wie sie bei jedem Maschinenwechsel auftreten, entfallen dadurch. Darüber hinaus können beliebige Zeichen frei programmierbar erzeugt werden. Damit kann jede Linse individuell gekennzeichnet werden.

In analoger Weise betrifft das die Herstellung von Formschalen z.B. zur Herstellung von ophtalmischen Linsen. Auch in den Formschalen können alle Markierungen zur späteren Orientierung der Linse und weitere Zeichen angebracht werden.

Erfindungsgemäß kann in bevorzugter Weise vorgesehen werden, daß das Drehwerkzeug relativ zur Spindel eine Schwenkbewegung ausführt. Dabei kann der Rohling beim Drehen zusätzlich um einen auf der Z-Achse liegenden Mittelpunkt geschwenkt werden. Alternativ dazu kann das Drehwerkzeug beim Drehen auch zusätzlich um einen auf der Z-Achse liegenden Mittelpunkt geschwenkt werden.

Da die Durchbiegung des Linsenmaterials des Materials (Glas oder Kunststoff für Linsen oder Spiegel) keine schnellen Werkzeugbewegungen erfordert, kann man diese Bewegung entweder durch eine langsame Z-Bewegung oder durch eine Schwenkbewegung ersetzen, der der schnelle Z-Antrieb überlagert ist. Die schnelle Z-Bewegung muß dann zur Herstellung von z.B. Gleitsichtlinsen nurmehr einen Hub von ca. 1 mm haben. Diese Vorgehensweise hat insbesondere den Vorteil, daß der zur Formgebung benutzte Bereich des Drehwerkzeuges kleiner wird. Ungleichmäßige Abnutzung des Drehwerkzeuges hat dann kleinere Auswirkungen.

Ein Problem jedes Drehvorganges ist die Singularität in der Mitte des Werkstückes. Es kann deshalb in bevorzugter Weise vorgesehen sein, daß der Rohling in zwei geringfügig vom Drehzentrum abweichenden off-axis-Positionen gedreht wird.

Dabei bearbeitet man den Rohling so, daß das jeweilige Drehzentrum gerade nur durch den Prozeß in der jeweils anderen Stellung erreicht wird. Man dreht also nicht bis zur Spindelachse.

Bei zu großen radialen Bewegungen kann die Drehbewegung am Rand ins Leere laufen. Man kann dies vermeiden, indem man erfindungsgemäß in X-Richtung die Bahnabstände variiert. Dies erfordert dann auch für diesen Vorschub-Antrieb eine entsprechende Dynamik, die man z.B. durch Anlegen von harmonischen Schwingungen erreichen kann. Auch hierfür ist ein dynamischer Massenausgleich vorteilhaft.

Der dynamische Massenausgleich erfordert, daß eine zweite Bewegung einer gleich großen Masse mit entgegengesetzter Bewegungsrichtung ausgeführt werden muß. Man kann diese kollineare Bewegung benutzen, um gleichzeitig die Vorder- und die Rückseite z.B. einer Kunststofflinse oder einer zweiten ophtalmischen Linse bzw. eine zweite Formschale zur Herstellung von ophtalmischen Linsen zu bearbeiten. Je nach Flächendesign und verwendetem Rohling kann der durch gleichzeitige Bearbeitung der Vorder- und Rückseite bewirkte Massenausgleich der beiden gegenläufigen schnellen Werkzeuge ausreichen, um die durch die Beschleunigung der Drehwerkzeuge bewirkte Reaktionskraft aufzunehmen. Wird ein solcher Ausgleich nicht vollständig erreicht, ist gegebenenfalls ein dritter kollinearer Massenausgleich erforderlich.

Diese Arbeitsweise hat zur Folge, daß auf der Vorder- und Rückseite des Rohlings im wesentlichen symmetrisch gearbeitet wird. Man verteilt die gewünschte optische Wirkung gleichmäßig auf beide Flächen. Dies kommt dem in der Feinoptik üblichen Gesichtspunkt gleicher optischer Wirkung beider Flächen nahe und eröffnet völlig neue technische Möglichkeiten, da ophtalmische Linsen bisher auf der Rückseite sphärisch oder torisch gestaltet sind.

Zur Positionsbestimmung und Zustandserfassung von Rohling und Drehwerkzeug sind entsprechende Meßsysteme für die lineare und rotatorische Bewegung erforderlich. Erfindungsgemäß ist in bevorzugter Weise vorgesehen, daß die Positionen von Drehwerkzeug und Rohling optoelektronisch abgetastet werden.

Die Position der Werkzeugbewegung in Z-Richtung sollte bevorzugt auf mindestens 0,0005mm genau bestimmt werden.

Meßsysteme mit mindestens 0,0005mm Auflösung und der erforderlichen Länge sind z. B. als optoelektronisch abgetastete Maßstäbe oder Laserinterferometer verfügbar. Zur Positionsbestimmung der Drehbewegung eignen sich optoelektronische Drehgeber. Ebenfalls verfügbar sind Tachometer zur Bestimmung der momentanen Bewegungsgeschwindigkeiten.

Weiter kann in erfindungsgemäß bevorzugter Weise vorgesehen werden, daß alle den Systemzustand beschreibenden Größen einem digitalen Regelkreis zugeführt werden und die Regelung unter Berücksichtigung der berechneten Geometrie der optischen Oberfläche, insbesondere einer ophtalmischen Linse bzw. einer Formschale zur Herstellung von ophtalmischen Linsen, erfolgt. Den Systemzustand beschreiben insbesondere die Position des Drehwerkzeugs und die der Spindel bzw. des Rohlings, die ständig gemessen und mit den zu erreichenden Daten verglichen werden. Daraus werden dann Korrekturdaten für die Zustellung des Drehwerkzeuges bestimmt.

Alternativ dazu können auch konventionelle analoge Regler eingesetzt werden.

Weiter kann in erfindungsgemäß bevorzugter Weise vorgesehen werden, daß der linearmotor für die Werkzeugbewegung in Z-Richtung reibungsarm ausgeführt wird.

Weiter kann in erfindungsgemäß bevorzugter Weise vorgesehen werden, daß der Abstand der Spulen und Magnete sowie das Lagerspiel durch thermische Einflüsse nicht verändert werden.

Die inkrementale Verstellung des Drehwerkzeuges wird durch einen Linearmotor bewerkstelligt. Hierzu kann ein elektrodynamischer, hydraulischer oder pneumatischer Linearmotor verwendet werden. Der Linearmotor besteht aus einem Läufer und einem Stator.

Für den dynamischen Massenausgleich wird in vorteilhafter Weise ein zweiter, gleich aufgebauter Linearmotor eingesetzt, der kollinear mit dem bearbeitenden Motor liegt und mechanisch mit dessen Gehäuse bzw. Stator über eine steife, kraftschlüssige Verbindung gekoppelt ist. Die Motoren werden in entgegengesetzte Richtungen angesteuert. Bei hydraulischen oder pneumatischen Antrieben kann der dynamische Massenausgleich auch über zwei entgegengesetzt laufende Kolben in einem Zylinder hergestellt werden.

Alternativ können die dynamischen Kräfte des schnellen Werkzeugantriebes in eine große Masse eingeleitet werden (statischer Massenausgleich). Dazu wird der schnelle Werkzeugantrieb direkt auf eine große Masse des Maschinenbettes gesetzt. Der X-Schlitten wird unter der Spindel angeordnet. Die große Masse muß so dimensioniert sein, daß die Reaktionsbewegung aus einer Bewegung des schnellen Werkzeugantriebes deutlich kleiner als einige Mikrometer bleibt.

Die Lagerung des Motorläufers ist zugleich die Lagerung des Werkzeuges. Als Lager können Luftlager, Luftlager mit unterstützenden Magnetlagern oder hydraulische Lager verwendet werden, die eine reibungsarme Bewegung in Z-Richtung erlauben, Querkräfte aus dem Bearbeitungsprozeß aber aufzunehmen in der Lage sind.

Die Antriebskräfte werden bevorzugt durch einen Ein- oder Mehrphasen-Linearmotor erzeugt. Einen derartigen Linearmotor kann man mit bewegter Spule oder alternativ mit bewegtem Magneten aufbauen. Die zweite Variante hat den Vorteil, daß die in der Spule anfallende Verlustleistung leichter abgeführt werden kann.

Der besondere Vorteil eines derartigen Werkzeugantriebs liegt auch darin, daß durch die Maschinenelemente Lager und Linearmotor der Hub in z-Richtung nicht begrenzt wird. Man kann Hübe in z-Richtung von einigen 10mm realisieren, wobei die Motorcharakteristik über den gesamten Verstellbereich konstant bleibt. Dies ist insbesondere für die Regelung des Motors von Vorteil.

Die Peltier-Kühlung kann eine Wasserkühlung auf der heißen Seite aufweisen. Mit der Peltier-Kühlung ist die Spulentemperatur auf einen konstanten Temperaturwert , z. B. auf 0,1K genau, regelbar, so daß die Luftspalte auch bei unterschiedlichen Belastungszuständen klein und konstant gehalten werden können.

In der oben bereits angedeuteten Weise kann die Werkzeugbewegung in der X-Achse durch eine Schwenkbewegung ersetzt sein, der der schnelle Z-Antrieb überlagert ist. Die Schwenkachse kann dabei der Spindel oder dem Werkzeugantrieb unterlagert werden.

Alternativ können auch bei dieser Anordnung die dynamischen Kräfte des schnellen Werkzeugantriebes in eine große Masse, z.B. in das Maschinenbett, eingeleitet werden. Dazu muß zunächst der Drehtisch in den passenden Radius zum Werkzeug gebracht und anschließend die Spindel auf dem Drehtisch in den gleichen Radius gestellt werden.

Um den Rohling, wie oben ebenfalls angedeutet, in zwei off-axis-Positionen bearbeiten zu können, kann die Spindel in radialer Richtung verschiebbar angeordnet sein. Zum Beispiel könnte der Werkzeughalter nacheinander mit Magnetkraft in zwei umschaltbare Positionen gebracht werden. Anstelle einer linearen Bewegung kann hier auch eine rotatorische Bewegung mit langem Schwenkradius vorgesehen sein. Der zusätzliche Hub in Z-Richtung ist unerheblich, weil die off-axis-Verschiebung nur sehr gering ist.

Die Bewegung des zweiten Linearmotors, der den dynamischen Massenausgleich bewirken soll, kann dazu ausgenutzt werden, die Rückseite einer optischen Oberfläche, insbesondere einer ophtalmischen Linse, und/oder gegebenenfalls eine zweite optische Oberfläche, insbesondere eine zweite ophtalmische Linse bzw. eine zweite Formschale zur Herstellung von ophtalmischen Linsen, mit den gleichen optischen Daten zu bearbeiten. Dabei werden die Spindel koaxial zum Rohling und zu beiden Seiten des Rohlings je ein Linearantrieb gelagert. Der zweite Linearantrieb weist ein zusätzliches Drehwerkzeug und ein Meßsystem zur Positionsbestimmung dieses Drehwerkzeuges auf und der Schlitten für die Bewegung des Rohlings in der X-Achse ist unter der Spindel gelagert ist und trägt diese. Die Kopplung der Antriebe erfolgt über eine steife Grundplatte des Maschinenbettes oder besser durch einen Gehäusekäfig, der die Kräfte symmetrisch aufnimmt.

Erfindungsgemäß kann zusätzlich vorgesehen sein, daß in diesem Fall ein weiterer dynamischer Massenausgleich dadurch bewirkt ist, daß kollinear zu beiden Linearantrieben ein dritter Linearantrieb angeordnet ist, dessen Gehäuse bzw. Stator mechanisch mit den Gehäusen bzw. Statoren der beiden anderen Linearantriebe über das Maschinenbett gekoppelt ist und der entgegengesetzt zur Kraftrichtung der aus der Bewegung des ersten und zweiten Linearantriebes resultierenden Kraft angesteuert ist.

Neben der Aufnahme der durch die Werkzeugzustellung bewirkten Reaktionskräfte hat diese Variante den weiteren Vorteil, daß auch die Prozeßkräfte am Werkstück weitgehend symmetriert werden.

Das Verfahren soll nachstehend anhand von Ausführungsbeispielen näher erläutert werden. In den zugehörigen Zeichnungen zeigen
Fig. 1 den prinzipiellen Aufbau einer Bearbeitungsmaschine zur Durchführung des erfindungsgemäßen Verfahrens mit linearen Achsen,
Fig. 2 eine zweite Variante für eine Bearbeitungsmaschine,
Fig. 3 die Prinzipdarstellung eines geeigneten elektrodynamischen Linearantriebes für das Drehwerkzeug,
Fig. 4 einen Linearantrieb für das Drehwerkzeug mit einem dynamischen Massenausgleich,
Fig. 5 die Prinzipdarstellung eines Linearantriebes für das Drehwerkzeug mit Hilfe eines hydraulischen oder pneumatischen Linearmotors,
Fig. 6 die Prinzipdarstellung für eine Bearbeitungsmaschine mit einer Schwenkachse,
Fig. 7 die Prinzipdarstellung für das Drehen eines Rohlings in zwei verschiedenen Positionen,
Fig. 8 das Prinzip der Werkstückverstellung in zwei verschiedenen Positionen,
Fig. 9 die dynamische Verstellung z.B. des Drehwerkzeuges in X-Richtung beim Drehen in zwei off-axis-Positionen,
Fig. 10 eine weitere Variante für den Aufbau einer Bearbeitungsmaschine mit gleichzeitiger Bearbeitung von Vorder- und Rückseite einer ophtalmischen Linse und
Fig. 11 das Blockschaltbild für einen Regleraufbau.

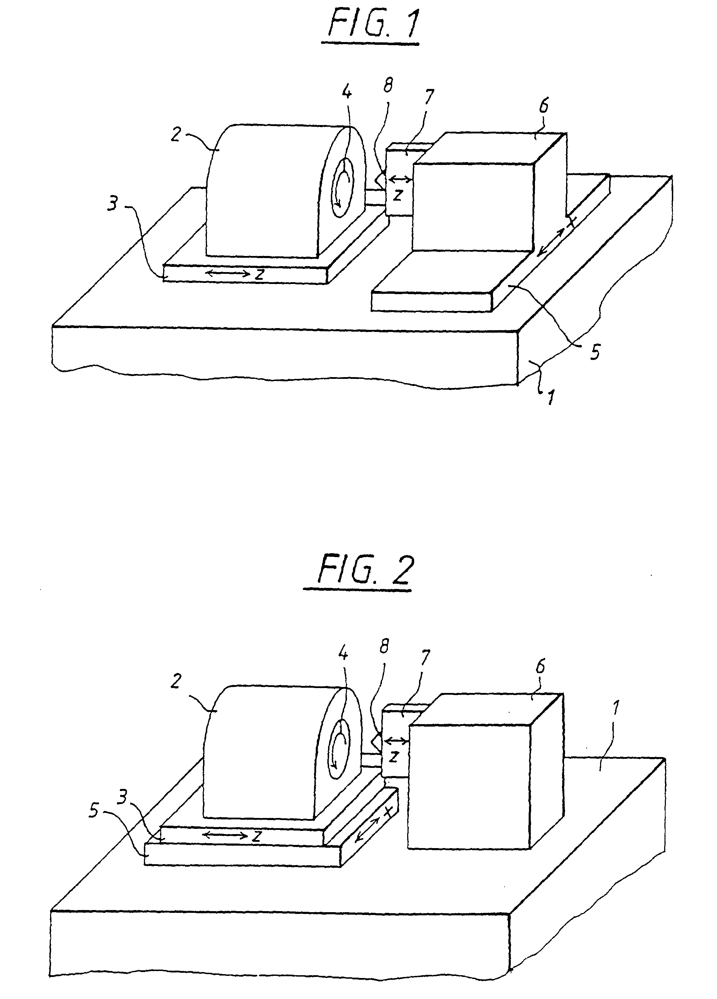

Fig. 1 zeigt eine Bearbeitungsmaschine zur Durchführung des erfindungsgemäßen Verfahrens. Die Bearbeitungsmaschine ist auf einem steifen Maschinenbett 1 aufgebaut. Die Spindel 2 ist auf einem in der Z-Achse bewegbaren Schlitten 3 gelagert. Die Spindel 2 nimmt den hier nicht gezeigten Rohling in einer Werkstückaufnahme 4 auf. Der Schlitten 3 wird zur Voreinstellung in eine geeignete Position gebracht und dann für die Dauer der Bearbeitung festgeklemmt.

Auf einem weiteren, in X-Richtung bewegbaren Schlitten 5 befindet sich der Werkzeugantrieb 6, der durch einen Linearmotor realisiert ist. Der Läufer 7 des Werkzeugantriebes 6 trägt das Drehwerkzeug 8.

Fig. 2 zeigt eine Variante der Bearbeitungsmaschine, bei der nicht der Werkzeugantrieb 6, sondern die Spindel 2 auf einem in X-Richtung verfahrbaren Schlitten 5 gelagert ist.

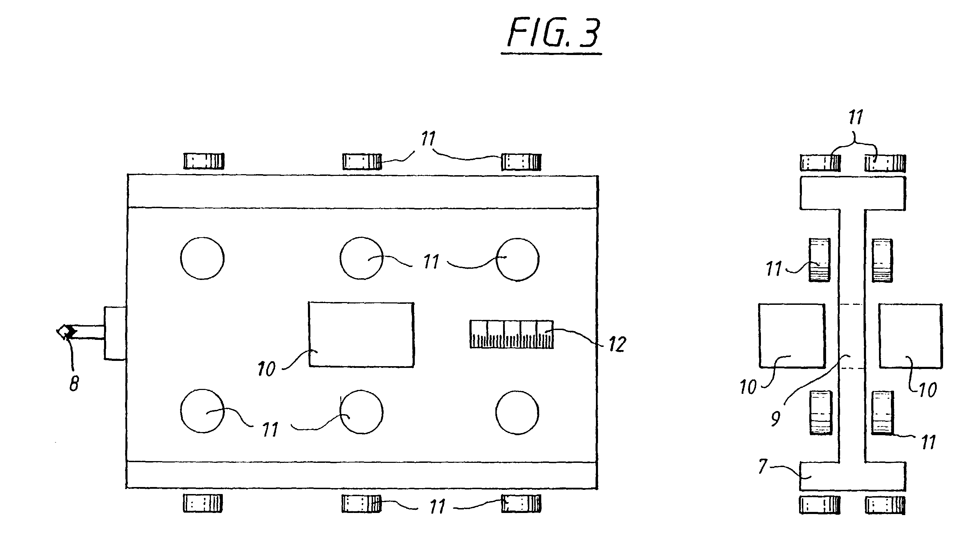

Einen möglichen Werkzeugantrieb stellt der elektrodynamische Linearmotor entsprechend Fig. 3 dar. Der Linearmotor besteht aus einem Läufer 7, der mit Permanentmagneten 9 ausgerüstet ist und dem Statorspulensystem 10. Zum Erreichen einer reibungsarmen Bewegung ist der Läufer 7 horizontal und vertikal in Luftlagern 11 gelagert. Zur Positionsbestimmung trägt der Läufer 7 ein Meßsystem 12.

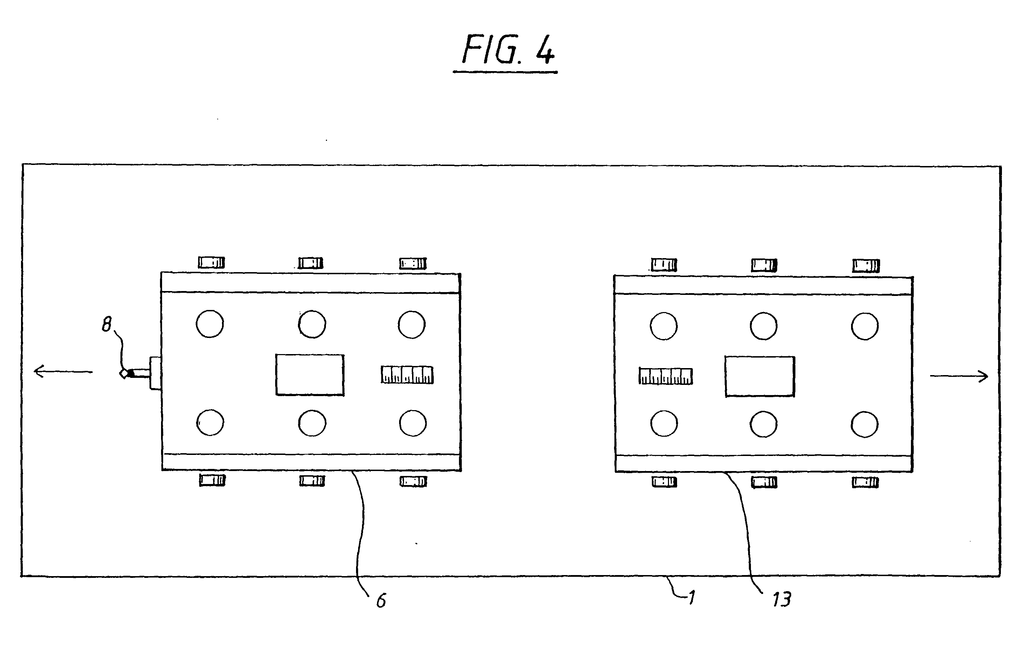

Fig. 4 zeigt ein Beispiel für den dynamischen Massenausgleich des Systems. Dazu ist ein kollinear zum Werkzeugantrieb 6 liegender Linearantrieb 13 vorgesehen, der allein dem Ausgleich der bei der schnellen Zustellbewegung entstehenden Reaktionskraft dient. Die Statoren beider Linearantriebe sind durch das Maschinenbett 1 kraftschlüssig miteinander gekoppelt. Die Linearantriebe werden beim Bearbeitungsvorgang gleichzeitig in entgegengesetzte Richtungen angesteuert.

Durch den dynamischen Massenausgleich werden Reaktionskräfte, verursacht durch die nötige schnelle Bewegung des Drehwerkzeuges 8, ausgeglichen und so jegliche unbeabsichtigte Bewegung des Drehwerkzeuges vermieden, wodurch die hohe Oberflächengüte des bearbeiteten Brillenglases und die Genauigkeit seiner optischen Geometrie ermöglicht wird.

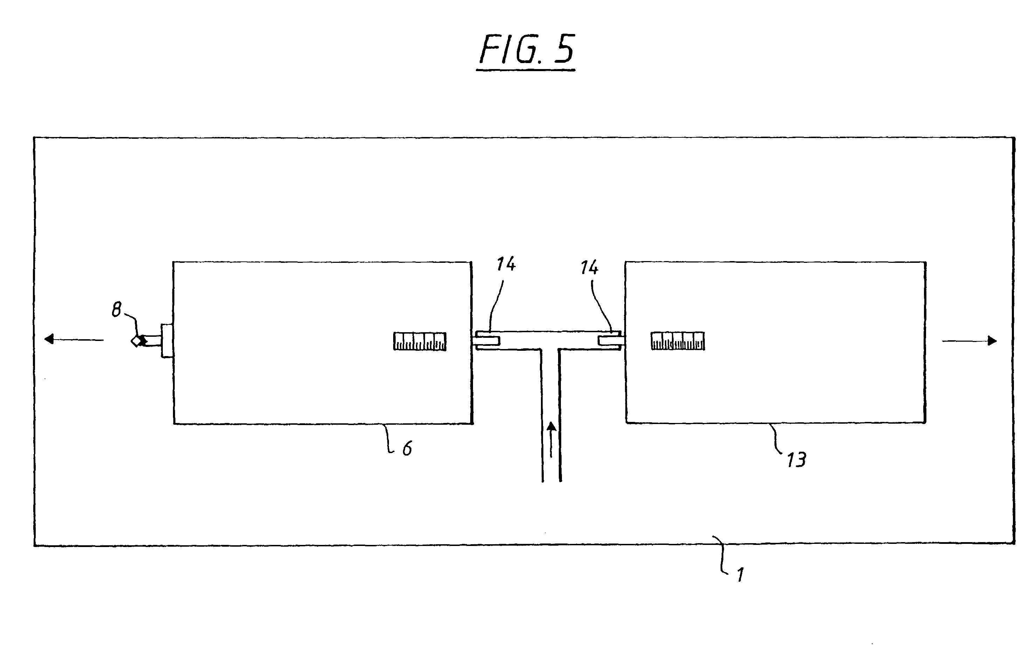

Eine analoge Einrichtung mit hydraulisch oder mit pneumatisch arbeitenden Antrieben zeigt Fig. 5. Die Läufer sind dabei durch entgegengesetzt laufende Kolben 14 realisiert.

Alternativ dazu kann der Massenausgleich durch Krafteinleitung in eine große Masse bewirkt werden. Dazu wird das Maschinenbett 1, wie es in Fig. 2 gezeigt ist, als große Masse ausgeführt. Die Masse wird so dimensioniert, daß ihre resultierende Bewegung eine Amplitude von weniger als 0,005 mm aufweist.

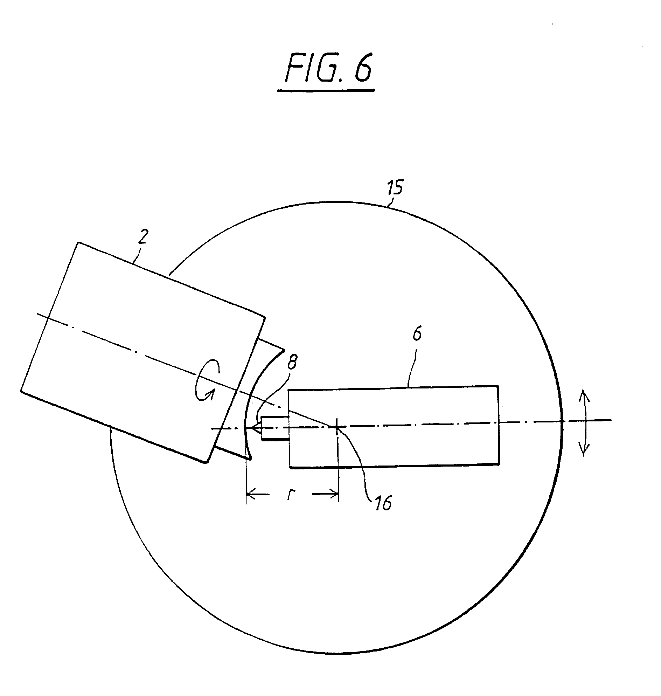

Fig. 6 zeigt einen Maschinenaufbau, bei dem statt einer Schlittenbewegung in X-Richtung eine Schwenkbewegung des Rohlings vorgesehen ist. Die Spindel 2 ist zu diesem Zweck auf einem Drehtisch 15 gelagert. Der Schwenkmittelpunkt 16 befindet sich auf der Z-Achse. Die Schwenkbewegung muß mit einem passenden Radius r ausgeführt werden, der so gewählt werden kann, daß die zusätzliche, der Schwenkbewegung überlagerte Bewegung des Drehwerkzeuges 8 in Richtung der Z-Achse ein Minimum wird.

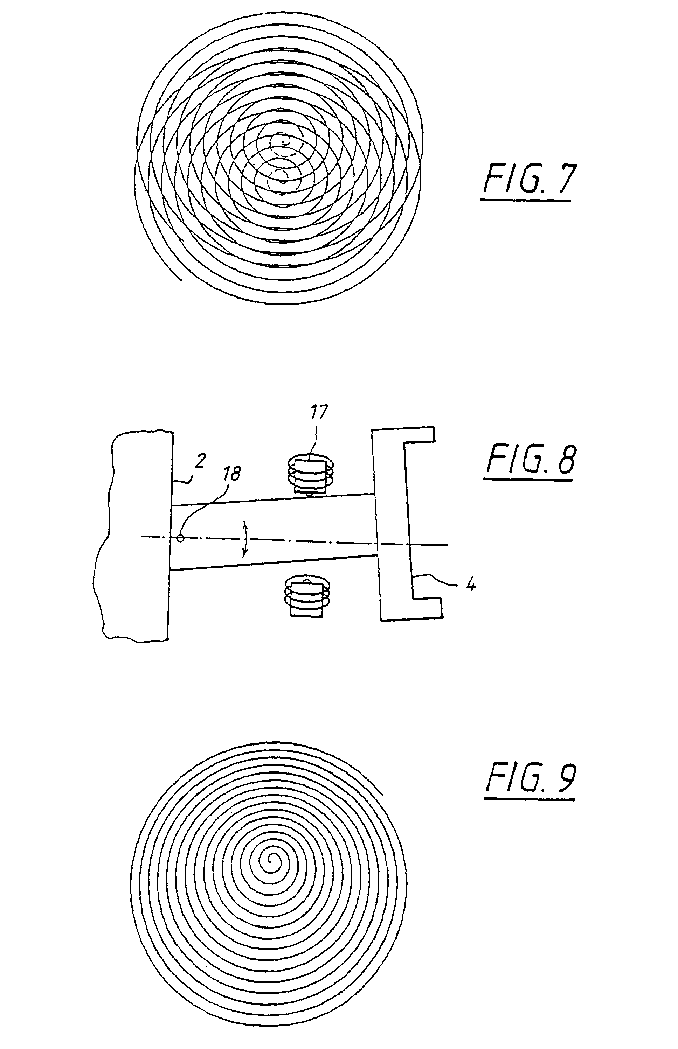

Die Beherrschung der Mittensingularität zeigt Fig. 7. Der Rohling wird in zwei geringfügig voneinander abweichenden außermittigen Positionen gedreht, wobei nicht bis zur Spindelachse gedreht wird. In der Darstellung sind die außermittigen Positionen schematisch übertrieben gezeigt. Die in Fig. 7 unterbrochene Linie wird nicht ausgeführt, der jeweils nicht bearbeitete Bereich wird dann von der anderen Position überdeckt.

Die Werkstückaufnahme 4 der Spindel 2 wird zu diesem Zweck geringfügig schwenkbar aufgeführt. Mittels magnetischer Kraft, bewirkt durch schaltbare Elektromagneten 17, kann, wie in Fig. 8 gezeigt ist, die Verschiebung der Werkstückaufnahme 4 in zwei verschiedene Positionen nach oben und unten durch Verdrehen um einen Drehpunkt 18 erreicht werden.

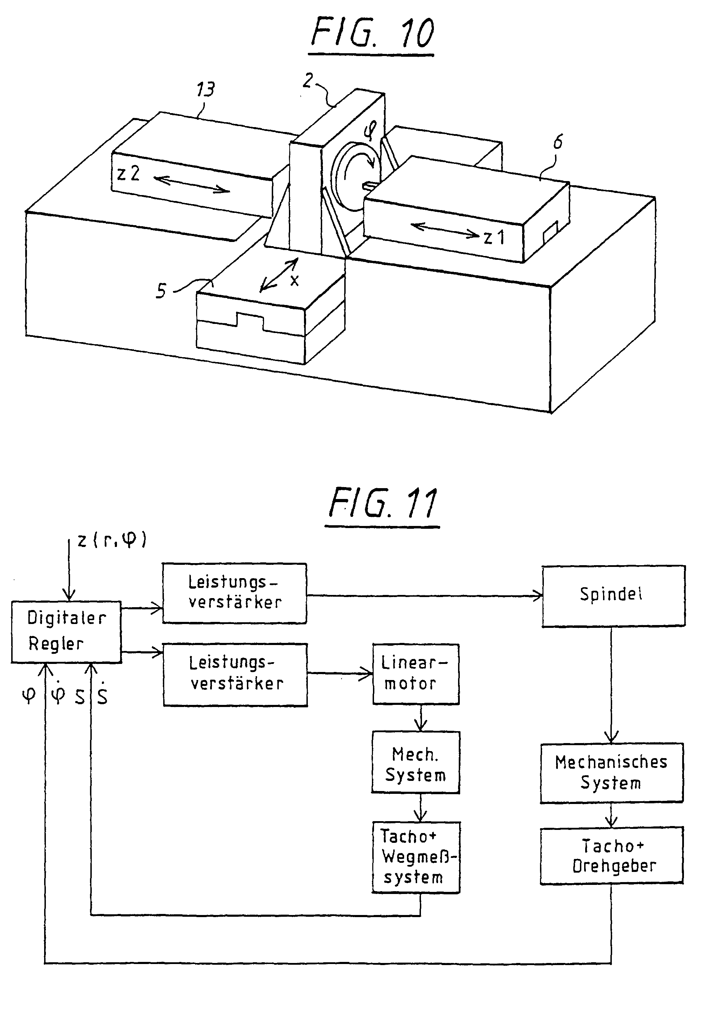

Um in diesem Falle die Drehbewegung am Rand des Rohlings nicht ins Leere laufen zu lassen, ist gemäß Fig. 9 vorgesehen, die Zustellbewegung in X-Richtung zu variieren.

Fig. 10 zeigt eine Variante einer Bearbeitungsmaschine, bei der der dynamische Massenausgleich ausgenutzt wird, um gleichzeitig die zweite Seite des Rohlings zu bearbeiten. Die Spindel 2 ist in diesem Fall auf einem Schlitten 5 gelagert. Die Werkstückaufnahme 4 ist so ausgebildet, daß der Rohling von beiden Seiten bearbeitet werden kann. Auf beiden Seiten der Spindel 2 sind Werkzeugantriebe 6, 13 vorgesehen, die entgegengesetzt gerichtet arbeiten. So kann die gewünschte optische Wirkung gleichermaßen auf beide Seiten der ophtalmischen Linse verteilt werden.

Fig. 11 zeigt schließlich ein Blockschaltbild eines Regelkreises zur Steuerung und Regelung der Bewegungen der Spindel 2 und des Drehwerkzeuges 8. Es wird mit einem digitalen Regler z.B. einem Signalprozessor gearbeitet, der eine optimale Anpassung an die Regelstrecke erlaubt. Struktur und Parameteroptimierung können als Funktion der Werkstückgeometrie erfolgen. Alle den Systemzustand beschreibenden Größen (mechanisches System, Tachos, Wegmeßsysteme) werden dem digitalen Regler zugeführt. Die langsame Bewegung in X-Richtung kann ebenfalls von dem Regler bedient werden. Diese Regelstrecke ist in Fig. 11 nicht ausgeführt. Unter Berücksichtigung des Sollwertes werden die Leistungsverstärker für die Motoren angesteuert. Die erforderliche Dynamik der Verstärker sollte bei 100dB liegen. Zur Modulation von feinen Strukturen ist eine entsprechende Bandbreite vorzusehen. Die Solldaten für die Bewegungen können vor der Bearbeitung erzeugt und in einem Speicher abgelegt werden. Vorzugsweise werden die Solldaten aber mit der die Fläche beschreibenden Funktion Z(r,phi) online berechnet.

Unter einer ophtalmischen Linse in dieser Beschreibung sind Brillenlinsen, Kontaktlinsen und intraokulare Linsen zu verstehen. Optische Oberflächen sind optisch wirksame Oberflächen von Linsen, Spiegeln oder sonstigen optischen Bauteilen, welche sich durch ihr Verhalten bei Transmission oder Reflexion elektromagnetischer Strahlung auszeichnen (insbesondere im infraroten, sichtbaren und ultravioletten Spektralbereich).

## Patentansprüche

1. Bearbeitungsmaschine zum Herstellen von optischen Oberflächen, insbesondere von oplitalmischen Linsen und Formschalen zur Herstellung von oplitalmischen Linsen, insbesondere von Kumststofflinsen, mit einer auf einem steifen Maschinenbett (1) gelagerten Spindel, an der ein Rohling für eine optische Oberflächenbearbeitung oder ein Rohling einer Formschale gehalten werden kann, und einem in Richtung auf den Rohling und von diesem weg bewegbaren Drehwerkzeug (8),
wobei das Drehwerkzeug (8) oder die Spindel (2) orthogonal zur Achsrichtung der Spindel (X-Achse) bewegbar ist,
**dadurch gekennzeichnet**
**dass** der Antrieb (6) für das Drehwerkzeug (8) in Richtung der Z-Achse durch einen inkremental zustellenden Linearmotor realisiert ist und dass zur Kühlung der Spule bzw. der Spulen des oder der Linearmotoren eine Peltier-Kühlung verwendet wird.

2. Bearbeitungsmaschine nach Anspruch 1,
**dadurch gekennzeichnet**
**dass** der Peltier-Kühlung eine WasserKühlung angeordnet ist.

3. Bearbeitungsmaschine nach Anspruch 1 oder 2, **dadurch gekennzeichnet, dass** die durch die Beschleunigung des Linearantriebes (6) bewirkte Reaktionskraft durch einen zweiten Linearantrieb (13), der kollinear zu dem ersten Linearantrieb (6) angeordnet ist und dessen Gehäuse bzw. Stator mechanisch mit dem Gehäuse bzw. Stator des ersten Linearantriebes (6) über das Maschinenbett (1) gekoppelt ist und der in entgegengesetzter Richtung zum ersten Linearantrieb (6) angesteuert ist, dynamisch ausgeglichen ist.

4. Bearbeitungsmaschine nach Anspruch 1 oder 2, **dadurch gekennzeichnet, dass** die durch die Beschleunigung des Linearantriebes (6) bewirkte Reaktionskraft durch Krafteinleitung in die Masse des Maschinenbettes (1) dynamisch ausgeglichen ist.

5. Bearbeitungsmaschine nach Anspruch 4, **dadurch gekennzeichnet, dass** der Schlitten (5) für die Bewegung in der X-Achse unter der Spindel (2) gelagert ist und die Spindel (2) trägt.

6. Bearbeitungsmaschine nach einem der Ansprüche 1 bis 5, **dadurch gekennzeichnet, dass** der Linearantrieb (6,13) ein Hydraulikmotor ist.

7. Bearbeitungsmaschine nach einem der Ansprüche 1 bis 5, **dadurch gekennzeichnet, dass** der Linearantrieb (6,13) ein elektrodynamischer Linearmotor ist.

8. Bearbeitungsmaschine nach einem der Ansprüche 1 bis 7, **dadurch gekennzeichnet, dass** der Läufer des Linearmotors luftgelagert ist.

9. Bearbeitungsmaschine nach einem der Ansprüche 1 bis 7, **dadurch gekennzeichnet, dass** der Läufer des Linearmotors mittels Luft und unterstützenden Magnetlagern gelagert ist.

10. Bearbeitungsmaschine nach einem der Ansprüche 1 bis 7, **dadurch gekennzeichnet, dass** der Läufer des Linearmotors hydraulisch gelagert ist.

11. Bearbeitungsmaschine nach einem der Ansprüche 1 bis 10, **dadurch gekennzeichnet, dass** als Messsystem für die lineare Bewegung des Drehwerkzeuges (8) optoelektronisch abgetastete Massstäbe dienen.

12. Bearbeitungsmaschine nach einem der Ansprüche 1 bis 10, **dadurch gekennzeichnet, dass** als Messsystem für die lineare Bewegung des Drehwerkzeuges (8) Laserinterferometer dienen.

13. Bearbeitungsmaschine nach einem der Ansprüche 1 bis 12, **dadurch gekennzeichnet, dass** als Messsystem für die rotatorische Bewegung des Rohlings ein optoelektronischer Drehgeber dient.

14. Bearbeitungsmaschine nach einem der Ansprüche 1 bis 12, **dadurch gekennzeichnet, dass** als Messsystem für die rotatorische Bewegung des Rohlings ein Tachometer dient.

15. Bearbeitungsmaschine nach einem der Ansprüche 1 bis 14, **dadurch gekennzeichnet, dass** die Bewegung in Richtung der X-Achse dadurch realisiert ist, dass die Spindel (2) um einen auf der Z-Achse gelegenen Mittelpunkt (16) schwenkbar gelagert ist.

16. Bearbeitungsmaschine nach einem der Ansprüche 1 bis 14, **dadurch gekennzeichnet, dass** der in der Z-Achse bewegbare und das Drehwerkzeug (8) tragende Schlitten (5) um einen auf der Z-Achse gelegenen Mittelpunkt schwenkbar gelagert ist.

17. Bearbeitungsmaschine nach einem der Ansprüche 1 bis 16, **dadurch gekennzeichnet, dass** die Spindel (2) koaxial zum Rohling gelagert ist, zu beiden Seiten des Rohlings je ein Linearantrieb (6,13) gelagert ist, der zweite Linearantrieb (13) ein zusätzliches Drehwerkzeug und ein Messsystem zur Positionsbestimmung dieses Drehwerkzeuges aufweist und der Schlitten (5) für die Bewegung des Rohlings in der X-Achse unter der Spindel (2) gelagert ist und diese trägt.

18. Bearbeitungsmaschine nach Anspruch 17, **dadurch gekennzeichnet, dass** ein zusätzlicher dynamischer Massenausgleich dadurch bewirkt ist, dass kollinear zu beiden Linearantrieben (6,13) ein dritter Linearantrieb angeordnet ist, dessen Gehäuse bzw. Stator mechanisch mit den Gehäusen bzw. Statoren der beiden anderen Linearantriebe (6,13) über das Maschinenbett (1) gekoppelt ist und der entgegengesetzt zur Kraftrichtung der aus der Bewegung des ersten und zweiten Linearantriebes resultierenden Kraft angesteuert ist.

19. Bearbeitungsmaschine nach einem der Ansprüche 1 bis 18, **dadurch gekennzeichnet, dass** zur Steuerung aller Antriebe und zur Verarbeitung der Positionsdaten des Rohlings und des oder der Drehwerkzeuge mindestens ein digitaler Regler eingesetzt ist.

20. Verfahren zum Herstellen von optischen Oberflächen, insbesondere von ophtalmischen Linsen und Formschalen zur Herstellung von ophtalmischen Linsen, insbesondere asphärischen Kunststofflinsen, bei der ein Rohling für eine optische Oberflächenbearbeitung oder ein Rohling für eine Formschale zur Herstellung von optischen Oberflächen an der Werkstückaufnahme einer Spindelachse (Z-Achse) einer Bearbeitungsmaschine gehalten und mittels eines Drehwerkzeuges, welches eine Relativbewegung zum Rohling ausüben kann, direkt zu seiner endgültigen Form gedreht wird, *wobei das Drehwerkzeug quer zur Werkzeugbewegungsrichtung (X-Achse) bewegbar ist und während jeder Spindelumdrehung inkrementale Zustellungen dieses Drehwerkzeuges in Richtung auf den Rohling und von diesem weg (Z-Achse) entsprechend vorgegebener oder on-line berechneter Daten der Oberfläche erfolgen*
**dadurch gekennzeichnet,**
**daß** die Bearbeitungsmaschine nach einem der Ansprüche 1 bis 19 zur Anwendung kommt.

21. Verfahren nach Anspruch 20, **dadurch gekennzeichnet, dass** der dynamische Massenausgleich ganz oder teilweise durch ein zweites Drehwerkzeug realisiert wird, das mittels eines eigenen Antriebes in Z-Richtung bewegbar ist und auf die zweite Seite des Rohlings oder auf einen zweiten Rohling einwirkt.

22. Verfahren nach Anspruch 20 oder 21, **dadurch gekennzeichnet, dass** der fertiggedrehte Rohling durch Polieren gebrauchsfähig gemacht wird.

23. Verfahren nach einem der Ansprüche 20 bis 22, **dadurch gekennzeichnet, dass** der fertiggedrehte Rohling durch Tauchen in Lack gebrauchsfähig gemacht wird.

24. Verfahren nach einem der Ansprüche 20 bis 23, **dadurch gekennzeichnet, dass** die Positionen von Drehwerkzeug und Rohling optoelektronisch abgetastet werden.

25. Verfahren nach einem der Ansprüche 20 bis 24, **dadurch gekennzeichnet, dass** alle den Systemzustand beschreibenden Größen einem digitalen Regelkreis zugeführt werden und die Regelung unter Berücksichtigung der berechneten Geometrie der optischen Oberfläche erfolgt.

26. Verfahren nach einem der Ansprüche 20 bis 25, **dadurch gekennzeichnet, dass** die Position des Drehwerkzeugs und der Spindel bzw. des Rohlings ständig gemessen und mit den zu erreichenden Daten verglichen werden und daraus Korrekturdaten für die Zustellung des Drehwerkzeuges bestimmt werden.

27. Verfahren nach einem der Ansprüche 20 bis 26, **dadurch gekennzeichnet, dass** die Position der Werkzeugbewegung in Z-Richtung auf mindestens 0,0005mm genau bestimmt wird.

## Claims

1. Processing machine for producing optical surfaces, in particular ophthalmic lenses and shell moulds for producing ophthalmic lenses, in particular plastic lenses, having, mounted on a stiff machine bed (1), a spindle on which it is possible to hold a blank for optical surface treatment or a blank of a shell mould, and a turning tool (8), which can be moved in the direction of the blank and away from the latter, wherein the turning tool (8) or the spindle (2) can be moved orthogonal to the axial direction of the spindle (X-axis),
**characterized**
**in that** the drive (6) for the turning tool (8) in the direction of the Z-axis is realized by an incrementally infeeding linear motor,
and **in that** Peltier cooling is used to cool the coil or coils of the linear motor or linear motors.

2. Processing machine according to Claim 1, **characterized in that** water cooling is assigned to the Peltier cooling.

3. Processing machine according to Claim 1 or 2,
**characterized in that** the reaction force effected by the acceleration of the linear drive (6) is dynamically balanced by a second linear drive (13), which is arranged colinearly with the first linear drive (6) and whose housing or stator is mechanically coupled to the housing or stator of the first linear drive (6) via the machine bed (1), and which is driven in the opposite direction to the first linear drive (6).

4. Processing machine according to Claim 1 or 2,
**characterized in that** the reaction force effected by the acceleration of the linear drive (6) is dynamically balanced by introducing force into the mass of the machine bed (1).

5. Processing machine according to Claim 4, **characterized in that** the carriage (5) for movement along the X-axis is mounted below the spindle (2) and bears the spindle (2).

6. Processing machine according to one of Claims 1 to 5, **characterized in that** the linear drive (6, 13) is a hydraulic motor.

7. Processing machine according to one of Claims 1 to 5, **characterized in that** the linear drive (6, 13) is an electrodynamic linear motor.

8. Processing machine according to one of Claims 1 to 7, **characterized in that** the rotor of the linear motor is on air-cushioned bearings.

9. Processing machine according to one of Claims 1 to 7, **characterized in that** the rotor of the linear motor is mounted by means of air and supporting magnet bearings.

10. Processing machine according to one of Claims 1 to 7, **characterized in that** the rotor of the linear motor is hydraulically mounted.

11. Processing machine according to one of Claims 1 to 10, **characterized in that** optoelectronically scanned scales serve as measuring system for the linear movement of the turning tool (8).

12. Processing machine according to one of Claims 1 to 10, **characterized in that** laser interferometers serve as measuring system for the linear movement of the turning tool (8).

13. Processing machine according to one of Claims 1 to 12, **characterized in that** an optoelectronic rotary transducer serves as measuring system for the rotary movement of the blank.

14. Processing machine according to one of Claims 1 to 12, **characterized in that** a tachometer serves as measuring system for the rotary movement of the blank.

15. Processing machine according to one of Claims 1 to 14, **characterized in that** the movement in the direction of the X-axis is realized by mounting the spindle (2) pivotably about a centre point (16) located on the Z-axis.

16. Processing machine according to one of Claims 1 to 14, **characterized in that** the carriage (5), which can move along the Z-axis and bears the turning tool (8), is mounted pivotably about a centre point located on the Z-axis.

17. Processing machine according to one of Claims 1 to 16, **characterized in that** the spindle (2) is mounted coaxially with the blank, one linear drive (6, 13) each is mounted on the two sides of the blank, the second linear drive (13) has an additional turning tool and a measuring system for determining the position of this turning tool, and the carriage (5) for moving the blank along the X-axis is mounted below the spindle (2) and bears the latter.

18. Processing machine according to Claim 17, **characterized in that** additional dynamic counterbalancing is effected by arranging colinearly with the two linear drives (6, 13) a third linear drive whose housing or stator is mechanically coupled to the housings or stators of the two other linear drives (6, 13) via the machine bed (1), and which is driven in a sense opposite to the direction of the force resulting from the movement of the first and second linear drives.

19. Processing machine according to one of Claims 1 to 18, **characterized in that** at least one digital controller is used to control all the drives and to process the position data of the blank and of the turning tool or tools.

20. Method for producing optical surfaces, in particular ophthalmic lenses and shell moulds for producing ophthalmic lenses, in particular aspherical plastic lenses, in which a blank for optical surface treatment or a blank of a shell mould for producing optical surfaces is held on the workpiece support of a spindle axis (Z-axis) of a processing machine and is directly turned to its final shape by means of a turning tool which can execute a relative movement with respect to the blank, it being the case that the turning tool can be moved transverse to the direction of tool movement (X-axis) and that during each spindle revolution the turning tool performs incremental infeeds in the direction of the blank and away from the latter (Z-axis) in accordance with prescribed or online-calculated data of the surface,
**characterized**
**in that** the processing machine according to one of Claims 1 to 19 is used.

21. Method according to Claim 20, **characterized in that** the dynamic counterbalancing is realized entirely or partially by a second turning tool which can be moved in the Z-direction by means of a dedicated drive and acts on the second side of the blank or on a second blank.

22. Method according to Claim 20 or 21, **characterized**
**in that** the finally turned blank is made ready for use by polishing.

23. Method according to one of Claims 20 to 22, characterized in that the finally turned blank is made ready for use by being dipped in lacquer.

24. Method according to one of Claims 20 to 23, characterized in that the positions of the turning tool and blank are sensed optoelectronically.

25. Method according to one of Claims 20 to 24, characterized in that all the parameters describing the system state are fed to a digital control loop, and control is performed taking account of the calculated geometry of the optical surface.

26. Method according to one of Claims 20 to 25, characterized in that the position of the turning tool and the spindle and/or the blank are continuously measured and compared with the data to be achieved, and correc) tion data for the infeed of the turning tool are determined therefrom.

27. Method according to one of Claims 20 to 26, characterized in that the position of the tool movement in i the Z-direction is determined to an accuracy of at least 0.0005 mm.

## Revendications

1. Machine d'usinage pour la fabrication de surfaces optiques, en particulier de lentilles ophtalmiques et de coques de moulage pour la fabrication de lentilles ophtalmiques, en particulier de lentilles en plastique, comprenant une broche montée sur un banc de machine rigide (1), sur laquelle une ébauche pour un traitement de surface optique ou une ébauche d'une coque de moulage peut être maintenue, et un outil de tournage (8) déplaçable vers et depuis l'ébauche, l'outil de tournage (8) ou la broche (2) étant déplaçable perpendiculairement à la direction de l'axe de la broche (l'axe des X),
**caractérisée en ce que**
la commande (6) de l'outil de tournage (8) est réalisée dans la direction de l'axe des Z par un moteur linéaire à avance par incréments et **en ce que** pour le refroidissement de la ou des bobines du ou des moteurs linéaires, on utilise une réfrigération par effet de Peltier.

2. Machine d'usinage selon la revendication 1, **caractérisée en ce qu'**un refroidissement à eau est associé à la réfrigération par effet de Peltier.

3. Machine d'usinage selon la revendication 1 ou 2, **caractérisée en ce que** la force de réaction causée par l'accélération de la commande linéaire (6) est équilibrée dynamiquement par une deuxième commande linéaire (13), qui est colinéaire à la première commande linéaire (6) et dont le logement ou le stator est accouplé mécaniquement au logement ou au stator de la première commande linéaire (6) par le biais du banc de la machine (1), et qui est commandée dans la direction opposée à la première commande linéaire (6).

4. Machine d'usinage selon la revendication 1 ou 2, **caractérisée en ce que** la force de réaction causée par l'accélération de la commande linéaire (6) est équilibrée dynamiquement par l'introduction d'une force dans la masse du banc de la machine (1).

5. Machine d'usinage selon la revendication 4, **caractérisée en ce que** le chariot (5) pour le mouvement suivant l'axe des X est monté sous la broche (2) et porte la broche (2).

6. Machine d'usinage selon l'une quelconque des revendications 1 à 5,
**caractérisée en ce que** la commande linéaire (6, 13) est un moteur hydraulique.

7. Machine d'usinage selon l'une quelconque des revendications 1 à 5,
**caractérisée en ce que** la commande linéaire (6, 13) est un moteur linéaire électrodynamique.

8. Machine d'usinage selon l'une quelconque des revendications 1 à 7,
**caractérisée en ce que** le curseur du moteur linéaire est monté sur paliers à air.

9. Machine d'usinage selon l'une quelconque des revendications 1 à 7,
**caractérisée en ce que** le curseur du moteur linéaire est monté sur paliers au moyen d'air et de paliers magnétiques de support.

10. Machine d'usinage selon l'une quelconque des revendications 1 à 7,
**caractérisée en ce que** le curseur du moteur linéaire est monté sur paliers hydrauliques.

11. Machine d'usinage selon l'une quelconque des revendications 1 à 10, **caractérisée en ce que** des échelles balayées opto-électroniquement servent de système de mesure pour le mouvement linéaire de l'outil de tournage (8).

12. Machine d'usinage selon l'une quelconque des revendications 1 à 10, **caractérisée en ce que** des interféromètres laser servent de système de mesure pour le mouvement linéaire de l'outil de tournage (8).

13. Machine d'usinage selon l'une quelconque des revendications 1 à 12, **caractérisée en ce qu'**un encodeur opto-électronique sert de système de mesure pour le mouvement de rotation de l'ébauche.

14. Machine d'usinage selon l'une quelconque des revendications 1 à 12, **caractérisée en ce qu'**un tachymètre sert de système de mesure pour le mouvement de rotation de l'ébauche.

15. Machine d'usinage selon l'une quelconque des revendications 1 à 14, **caractérisée en ce que** le mouvement dans la direction de l'axe des X est réalisé **en ce que** la broche (2) est montée de manière à pouvoir pivoter autour d'un centre (16) placé sur l'axe des Z.

16. Machine d'usinage selon l'une quelconque des revendications 1 à 14, **caractérisée en ce que** le chariot (5) déplaçable suivant l'axe des Z et portant l'outil de tournage (8) est monté de manière à pouvoir pivoter autour d'un centre placé sur l'axe des Z.

17. Machine d'usinage selon l'une quelconque des revendications 1 à 16, **caractérisée en ce que** la broche (2) est montée coaxialement à l'ébauche, des deux côtés de l'ébauche, une commande linéaire respective (6, 13) est montée, la deuxième commande linéaire (13) présente un outil de tournage supplémentaire et un système de mesure pour la détermination de la position de cet outil de tournage et le chariot (5) pour le mouvement de l'ébauche suivant l'axe des X est monté sous la broche (2) et porte celle-ci.

18. Machine d'usinage selon la revendication 17, **caractérisée en ce qu'**un équilibrage dynamique supplémentaire des masses est réalisé par le fait qu'une troisième commande linéaire est disposée de manière colinéaire aux deux commandes linéaires (6, 13), dont le logement ou le stator est accouplé mécaniquement aux logements ou aux stators des deux autres commandes linéaires (6, 13) par le biais du banc de la machine (1), et est commandée dans la direction opposée à la direction de la force résultant du mouvement des première et deuxième commandes linéaires.

19. Machine d'usinage selon l'une quelconque des revendications 1 à 18, **caractérisée en ce que** pour la commande de toutes les commandes et pour le traitement des données de position de l'ébauche et du ou des outils de tournage, on utilise au moins un régulateur numérique.

20. Procédé de fabrication de surfaces optiques, en particulier de lentilles ophtalmiques et de coques de moulage pour la fabrication de lentilles ophtalmiques, en particulier de lentilles en plastique asphériques, dans lequel une ébauche pour un traitement de surface optique ou une ébauche pour une coque de moulage pour la fabrication de surfaces optiques est maintenue sur la fixation de pièce d'un axe de broche (axe des Z) d'une machine d'usinage et est tournée directement à sa forme finale au moyen d'un outil de tournage, qui peut exercer un mouvement relatif par rapport à l'ébauche, où l'outil de tournage peut se déplacer transversalement à la direction de mouvement de l'outil (axe des X) et au cours de chaque rotation de la broche, des avances par incréments de cet outil de tournage sont effectuées vers et depuis l'ébauche (axe des Z) en fonction de données de surface prédéfinies ou calculées en ligne,
**caractérisé en ce que**
la machine d'usinage selon l'une quelconque des revendications 1 à 19 est utilisée.

21. Procédé selon la revendication 20, **caractérisé en ce que** l'équilibrage dynamique des masses est réalisé totalement ou partiellement par un deuxième outil de tournage, qui est déplaçable au moyen d'une commande propre dans la direction de l'axe des Z, et agit sur le deuxième côté de l'ébauche ou sur une deuxième ébauche.

22. Procédé selon la revendication 20 ou 21, **caractérisé en ce que** l'ébauche, après le tournage, est rendue apte à l'utilisation par polissage.

23. Procédé selon l'une quelconque des revendications 20 à 22,
**caractérisé en ce que** l'ébauche, après le tournage, est rendue apte à l'utilisation par trempage dans du vernis.

24. Procédé selon l'une quelconque des revendications 20 à 23, **caractérisé en ce que** les positions de l'outil de tournage et de l'ébauche sont détectées de manière opto-électronique.

25. Procédé selon l'une quelconque des revendications 20 à 24, **caractérisé en ce que** toutes les grandeurs décrivant l'état du système sont acheminées à un circuit de réglage numérique et que le réglage s'effectue en tenant compte de la géométrie calculée de la surface optique.

26. Procédé selon l'une quelconque des revendications 20 à 25, **caractérisé en ce que** la position de l'outil de tournage et de la broche ou de l'ébauche sont mesurées en continu et comparées aux données que l'on veut obtenir, et des données de correction sont déterminées à partir de celles-ci pour l'avance de l'outil de tournage.

27. Procédé selon l'une quelconque des revendications 20 à 26, **caractérisé en ce que** la position du mouvement de l'outil dans la direction de l'axe des Z est déterminée avec une précision d'au moins 0,0005 mm.
